# EUROPÄISCHE PATENTSCHRIFT

(11) **EP 3 921 210 B1**
(45) Veröffentlichungstag und Bekanntmachung des Hinweises auf die Patenterteilung: **04.10.2023**
(21) Anmeldenummer: 19817179.5
(22) Anmeldetag: 30.11.2019
(51) Int. Cl.: B60S 1/34, B60S 1/04

(54) **KOPPLUNGSVORRICHTUNG**
COUPLING DEVICE
DISPOSITIF D'ACCOUPLEMENT

(30) Priorität: 07.02.2019 DE 102019201537
(43) Veröffentlichungstag der Anmeldung: 15.12.2021
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2019/083201
(87) Internationale Veröffentlichungsnummer: WO 2020/160812

(56) Entgegenhaltungen:
- CH-A- 522 522
- DE-A1- 4 032 256
- DE-A1-102013 212 195
- FR-A1- 2 600 026
- US-A- 4 782 547

## Beschreibung

Es ist bereits eine Kopplungsvorrichtung, insbesondere Wischarmkopplungsvorrichtung bekannt, mit zumindest einem Verbindungselement und mit zumindest einer ersten Kopplungseinheit, die in einem montierten Zustand dazu vorgesehen ist, mit einer Wischstange eines Wischarms verbunden zu werden und einen Wischflüssigkeitskanal zumindest teilweise aufzunehmen, und welche mit dem zumindest einen Verbindungselement verbunden ist. Aus der DE 40 32 256 A1 ist eine Kopplungsvorrichtung mit den Merkmales des Oberbegriffs des Anspruchs 1 bekannt.

### Offenbarung der Erfindung

Die Erfindung geht aus von einer Kopplungsvorrichtung, insbesondere Wischarmkopplungsvorrichtung, mit zumindest einem Verbindungselement und mit zumindest einer ersten Kopplungseinheit, die in einem montierten Zustand dazu vorgesehen ist, mit einer Wischstange eines Wischarms verbunden zu werden und einen Wischflüssigkeitskanal zumindest teilweise aufzunehmen, und welche in einem ersten Bereich des zumindest einen Verbindungselements mit dem zumindest einen Verbindungselement verbunden ist.

Es wird vorgeschlagen, dass die Kopplungsvorrichtung zumindest eine zweite Kopplungseinheit aufweist, die in einem montierten Zustand dazu vorgesehen ist, mit der Wischstange des Wischarms verbunden zu werden und den Wischflüssigkeitskanal zumindest teilweise aufzunehmen, und welche in einem von dem ersten Bereich in Haupterstreckungsrichtung verschieden angeordneten zweiten Bereich des zumindest einen Verbindungselements mit dem zumindest einen Verbindungselement verbunden ist. Vorzugsweise sind die zwei Kopplungseinheiten dazu vorgesehen, die Wischstange jeweils in voneinander verschiedenen, insbesondere voneinander beabstandeten Bereichen zu kontaktieren. Bevorzugt ist die erste Kopplungseinheit in einem montier ten Zustand gegenüber der zweiten Kopplungseinheit abgewinkelt. Die zwei Kopplungseinheiten sind insbesondere lediglich über das Verbindungselement verbunden.

Unter einer "Kopplungsvorrichtung" soll insbesondere zumindest ein Teil, insbesondere eine Unterbaugruppe, eines Wischers, insbesondere eines Scheibenwischers, vorteilhaft eines Fahrzeugscheibenwischers und besonders vorteilhaft eines Kraftfahrzeugscheibenwischers, verstanden werden. Insbesondere ist die Kopplungsvorrichtung zu einer Kopplung mit einem Wischarm vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Der Wischarm ist insbesondere an einem Ende mit einem Wischermotor verbunden. Der Wischarm ist insbesondere von einem, länglichen Element des Scheibenwischers gebildet, das eine Wischbewegung von dem Wischermotor an ein an dem mit dem Wischermotor verbundenen Ende gegenüberliegenden Ende angebrachtes Wischblatt überträgt. Unter einem "Wischblatt" soll insbesondere ein Bauteil verstanden werden, das aus mehreren Elementen, wie insbesondere zumindest einer Wischlippe, zusammengesetzt ist und dazu vorgesehen ist, mit der Wischlippe vollständig auf einer zu wischenden Scheibe aufzuliegen, wobei die Wischlippe im zumindest einem Betriebszustand über die Scheibe wischt.

Ferner soll unter einer "Wischstange" insbesondere ein längliches Bauteil des Wischarms verstanden werden, das abschnittsweise zumindest im Wesentlichen parallel zu der Haupterstreckungsrichtung des Wischarms verläuft. Unter "abschnittsweise zumindest im Wesentlichen parallel" soll insbesondere verstanden werden, dass eine Haupterstreckungsrichtung eines Teilbereichs eines Elements maximal 45°, bevorzugt maximal 30° von einer Bezugsrichtung, insbesondere von der Haupterstreckungsrichtung des Wischarms in diesem Teilbereich, abweicht. Vorzugsweise soll unter einer Wischstange insbesondere ein Bauteil verstanden werden, das dazu vorgesehen ist, eine Antriebsachse des Wischarms indirekt mit einem Aufnahmebereich für ein Wischblatt zur Übertragung einer Bewegung, insbesondere einer Drehbewegung, zu verbinden. Bevorzugt soll darunter insbesondere ein starres Bauteil verstanden werden, das dazu vorgesehen ist, eine Antriebsbewegung und/oder einen Anpressdruck des Wischarms zumindest indirekt auf einen Aufnahmebereich für ein Wischblatt zu übertragen. Vorzugsweise ist die Wischstange aus einem Metall ausgebildet. Beispielsweise ist denkbar, dass der Wischarm zumindest eine Abwinklung aufweist, welche den Wischarm in zumindest zwei Abschnitte unterteilt, welche wiederum jeweils verschiedene Haupterstreckungsrichtungen, insbesondere "abschnittsweise Haupterstreckungsrichtungen", aufweisen. In diesem Fall wäre die Wischstange in jedem der beiden Abschnitte zumindest im Wesentlichen parallel zu der Haupterstreckungsrichtung des Wischarms angeordnet. Vorzugsweise erstreckt sich die Wischstange im Wesentlichen über die gesamte Haupterstreckungslänge des Wischarms. Unter einer "Haupterstreckungsrichtung" soll insbesondere eine Richtung verstanden werden, welche parallel zu einer längsten Kante eines kleinsten geometrischen Quaders verläuft, welcher das Objekt gerade noch vollständig umschließt. Unter einer "Haupterstreckungslänge" soll die maximale Länge verstanden werden, welche ein Objekt entlang seiner Haupterstreckungsrichtung aufweist.

Ferner soll unter einem "Wischflüssigkeitskanal" insbesondere ein Kanal verstanden werden, der dazu vorgesehen ist, insbesondere zumindest in einem Teilabschnitt Wischflüssigkeit in einem Betrieb insbesondere von einem Speicher zu einem Wischdüsenelement zu einer Ausgabe von Wischflüssigkeit zu leiten. Vorzugsweise soll darunter ein Kanal verstanden werden, der in zumindest einem Teilabschnitt dazu vorgesehen ist, Wischflüssigkeit zu einer Leitung und/oder Förderung aufzunehmen. Besonders bevorzugt soll darunter insbesondere ein Kanal verstanden werden, der in zumindest einem Betriebszustand zu einer direkten Aufnahme von Wischflüssigkeit vorgesehen ist. Vorzugsweise soll unter einem "Wischdüsenelement" ein Element mit einem Anschluss an einen Wischflüssigkeitskanal verstanden werden, welches zumindest eine Öffnung zu einer Ausgabe von Wischflüssigkeit, insbesondere auf eine Scheibe, umfasst.

Unter einem "Verbindungselement" soll insbesondere ein Element verstanden werden, welches dazu vorgesehen ist, ein Objekt mit zumindest einem weiteren Objekt zu verbinden. Vorzugsweise verbindet das zumindest eine, insbesondere genau eine, Verbindungselement die zumindest eine erste Kopplungseinheit mit der zumindest einen zweiten Kopplungseinheit. Vorzugsweise weist das Verbindungselement eine Haupterstreckungslänge auf, welche zumindest der Haupterstreckungslänge der ersten Kopplungseinheit zuzüglich zumindest der Haupterstreckungslänge der zweiten Kopplungseinheit entspricht. Vorzugsweise ist die Haupterstreckungslänge des Verbindungselements, insbesondere um zumindest 0,25 cm, bevorzugt zumindest 0,5 cm, besonders bevorzugt zumindest 1 cm, länger als die Haupterstreckungslänge der ersten Kopplungseinheit zuzüglich der Haupterstreckungslänge der zweiten Kopplungseinheit. Grundsätzlich wäre jedoch auch denkbar, dass das Verbindungselement lediglich zwischen der ersten Kopplungseinheit und der zweiten Kopplungseinheit angeordnet ist. Vorzugsweise umfasst das Verbindungselement entlang seiner Hauptersteckungsrichtung zumindest drei Bereiche, insbesondere zumindest zwei Endbereich, welche die Enden des Verbindungselements in jeweils eine Haupterstreckungsrichtung umfassen und einen dazwischen gelegenen mittigen Bereich. Vorzugsweise ist das Verbindungelement in einem ersten Bereich, insbesondere ersten Endbereich, des Verbindungselements mit der ersten Kopplungseinheit verbunden. Vorzugsweise ist das Verbindungselement in einem von dem ersten Bereich in Haupterstreckungsrichtung verschiedenen zweiten Bereich, insbesondere zweiten Endbereich, des Verbindungselements mit der zweiten Kopplungseinheit verbunden. Vorzugsweise ist das Verbindungselement als Windabweiserelement ausgebildet. Unter einem "Windabweiserelement" soll insbesondere ein Element verstanden werden, das dazu vorgesehen ist, einen auf die Wischarmvorrichtung wirkenden Fahrtwind abzuweisen und/oder für ein Anpressen der Kopplungsvorrichtung an einem Wischarm zu nutzen. Bevorzugt weist das Verbindungselement zumindest eine konkave Außenfläche auf. Vorzugsweise ist die konkave Außenfläche an einer Seite von einer Abrisskante begrenzt ausgebildet. Dadurch kann eine vorteilhafte Aerodynamik erreicht werden, welche insbesondere bei Hochgeschwindigkeiten für Anpressen der Kopplungsvorrichtung sorgt.

Des Weiteren soll unter einer "Kopplungseinheit" insbesondere eine Einheit verstanden werden, die zu einer Herstellung einer Verbindung, insbesondere einer zerstörungsfrei lösbaren Verbindung, vorgesehen ist. Vorzugsweise soll darunter eine Einheit verstanden werden, die dazu vorgesehen ist, zumindest die Kopplungsvorrichtung form-, kraft- und/oder stoffschlüssig mit einer Wischstange eines Wischarms und einem Wischflüssigkeitskanal zu verbinden. Besonders bevorzugt soll darunter eine Einheit verstanden werden, die zur Herstellung einer zerstörungsfrei lösbaren Verbindung vorgesehen ist, wobei die Verbindung dabei insbesondere werkzeuglos herstellbar ist. Die zumindest eine erste Kopplungseinheit und die zumindest eine zweite Kopplungseinheit begrenzen jeweils einen Aufnahmebereich. Unter einem "Aufnahmebereich" soll insbesondere ein Bereich verstanden werden, der zur Aufnahme eines zu koppelnden Bauteils vorgesehen ist. Vorzugsweise weist der Aufnahmebereich eine Querschnittsform, geschnitten jeweils senkrecht zur Haupterstreckungsrichtung der Kopplungseinheiten, auf, die zumindest annähernd einer Querschnittsform zumindest zwei aufzunehmender Bauteile, insbesondere der Wischstange und des Wischflüssigkeitskanals, entspricht.

Besonders bevorzugt sind die Aufnahmebereiche in zumindest einer Ebene, von einem Mittelpunkt der Aufnahmebereiche in der Ebene aus betrachtet, in einem Winkelbereich von zumindest 90°, vorzugsweise von zumindest 120° und besonders bevorzugt von zumindest 180° von der jeweiligen Kopplungseinheit umgeben. Besonders bevorzugt sind die Aufnahmebereiche in zumindest einer Ebene, von einem Mittelpunkt der Aufnahmebereiche in der Ebene aus betrachtet, in einem Winkelbereich von zumindest 120°, vorzugsweise von zumindest 180° und besonders bevorzugt von zumindest 270° von der jeweiligen Kopplungseinheit und dem Verbindungselement umgeben. Vorzugsweise weist die erste Kopplungseinheit und/oder die zweite Kopplungseinheit entlang der Haupterstreckungsrichtung einen gleichbleibenden Querschnitt auf. Die Aufnahmebereiche der zumindest einen ersten Kopplungseinheit und der zumindest einen zweiten Kopplungseinheit weisen vorzugsweise jeweils einen Öffnungsbereich auf. Unter einem "Öffnungsbereich" soll insbesondere ein Bereich, bevorzugt ein immaterieller Bereich, verstanden werden, der vorzugsweise an den zumindest einen Aufnahmebereich angrenzt und über welchen der zumindest eine angrenzende Aufnahmebereich direkt mit einer Umgebung der Windabweisereinheit verbunden ist. Vorzugsweise soll darunter ein Bereich verstanden werden, über welchen der zumindest eine angrenzende Aufnahmebereich in einer Ebene senkrecht zu einer Haupterstreckungsrichtung des Aufnahmebereichs und/oder der Windabweisereinheit direkt mit einer Umgebung der Kopplungsvorrichtung verbunden ist. Besonders bevorzugt soll darunter insbesondere ein Bereich verstanden werden, in welchem der zumindest eine angrenzende Aufnahmebereich, in einer Ebene senkrecht zu einer Haupterstreckungsrichtung des Aufnahmebereichs und/oder der Kopplungsvorrichtung betrachtet, von einem materiellen Körper der zumindest einen ersten Kopplungseinheit und/oder der zumindest einen zweiten Kopplungseinheit unbegrenzt ist.

Vorzugsweise ist das zumindest eine Verbindungselement einstückig mit der zumindest einen ersten Kopplungseinheit und mit der zumindest einen zweiten Kopplungseinheit ausgebildet. Vorzugsweise sind das zumindest eine Verbindungselement und die zumindest eine erste Kopplungseinheit und die zumindest eine zweite Kopplungseinheit aus einem Stück geformt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren oder Extrusionsverfahren, bevorzugt einem Co-Extrusionsverfahren, und vorteilhaft aus einem einzelnen Rohling. Vorzugsweise soll darunter insbesondere einteilig, besonders bevorzugt in einem Urformprozess hergestellt verstanden werden. Dadurch kann eine vorteilhafte Kopplungsvorrichtung bereitgestellt werden. Vorzugsweise kann dadurch eine Anzahl von Bauteilen gering gehalten werden, wodurch insbesondere eine vorteilhaft einfache und schnelle Montage erreicht werden kann.

Durch die erfindungsgemäße Ausgestaltung der Kopplungsvorrichtung kann insbesondere eine vorteilhaft variable Kopplungsvorrichtung bereitgestellt werden. Es kann insbesondere eine Anpassung der Kopplungsvorrichtung an eine Wischstange erreicht werden. Insbesondere kann ein gekrümmter Verlauf der Kopplungsvorrichtung an der Wischstange erreicht werden. Es kann insbesondere eine schränkungs- und biegeanpassungsfähige Kopplungsvorrichtung bereitgestellt werden. Insbesondere kann eine Kopplung durch die Kopplungseinheiten über lediglich einen Öffnungsbereich erfolgen. Insbesondere kann dadurch eine vorteilhaft leichte Montage der Kopplungsvorrichtung beispielsweise an einer gekrümmten Wischstange erreicht werden. Besonders vorteilhaft kann eine weitgehend unsichtbare Schlauchführung des Wischflüssigkeitskanals erreicht werden. Weiterhin vorteilhaft kann eine Schlauchführung des Wischflüssigkeitskanals erreicht werden, welche sich an den Wischarmverlauf anschmiegt. Dadurch kann weiterhin ein vorteilhaftes Transporthandling der Kopplungsvorrichtung erreicht werden, bei welchem ein Risiko, dass sich der Schlauch des Wischflüssigkeitskanals irgendwo verhakt, gesenkt wird.

Des Weiteren wird vorgeschlagen, dass das zumindest eine Verbindungselement zumindest einen weiteren Bereich entlang seiner Haupterstreckung aufweist, welcher frei von der ersten Kopplungseinheit und frei von der zweiten Kopplungseinheit ausgebildet ist. Vorzugsweise ist der weitere Bereich mittig zwischen dem ersten Endbereich und dem zweiten Endbereich angeordnet. Vorzugsweise weist das Verbindungselement einen mittigen Bereich zwischen der ersten Kopplungseinheit und der zweiten Kopplungseinheit auf. Vorzugsweise ist der mittige Bereich frei von der ersten Kopplungseinheit und frei von der zweiten Kopplungseinheit ausgebildet. Besonders bevorzugt ist der mittige Bereich des Verbindungselements zwischen dem ersten Bereich der Haupterstreckung, insbesondere Endbereich der Haupterstreckung, welcher verbunden mit der ersten Kopplungseinheit ausgebildet ist, und dem zweiten Bereich der Haupterstreckung, insbesondere Endbereich der Haupterstreckung, welcher verbunden mit der zweiten Kopplungseinheit ausgebildet ist, angeordnet. Dadurch kann eine vorteilhafte Biegung des Verbindungselements unabhängig von den Kopplungseinheiten in dem weiteren, insbesondere mittigen, Bereich erreicht werden.

Nach der Erfindung ist das Verbindungselement aus einem anderen Material ausgebildet als die erste Kopplungseinheit und als die zweite Kopplungseinheit.

Das zumindest eine Verbindungselement ist aus zumindest einem Material ausgebildet, welches sich von dem zumindest einen Material zur Ausbildung der Kopplungseinheiten unterscheidet. Vorzugsweise ist das zumindest eine Verbindungselement aus einem Material gefertigt, welches biegsame und/oder dehnbare und/oder flexible Eigenschaften aufweist. Vorzugsweise ist das zumindest eine Verbindungselement aus einem Kunststoff, insbesondere einem gummiartigen Kunststoffmaterial wie Kautschuk. Vorzugsweise ist das Material zur Ausbildung des Verbindungselements weicher, insbesondere flexibler und/oder dehnbarer und/oder biegsamer, als das zumindest eine Material zur Ausbildung der Kopplungseinheiten. Dadurch kann vorteilhaft ein gekrümmter Wischarmverlauf mit einer Kopplungsvorrichtung ausgestattet werden.

Ferner wird vorgeschlagen, dass die zumindest eine erste Kopplungseinheit und die zumindest eine zweite Kopplungseinheit mit dem Verbindungselement in einem Co-Extrusionsverfahren hergestellt sind. Vorzugsweise sind die zumindest eine erste und die zumindest eine zweite Kopplungseinheit aus demselben Material hergestellt. Vorzugsweise sind die Kopplungseinheiten aus einem starren Material hergestellt. Dadurch kann eine vorteilhafte Kombination der starren tragenden Kopplungseinheiten mit dem flexiblen Verbindungselement hergestellt werden. Insbesondere kann dadurch eine stabile und entlang seiner Haupterstreckungsachse weitgehend flexible Kopplungsvorrichtung ausgebildet werden.

Des Weiteren wird vorgeschlagen, dass die zumindest eine erste Kopplungseinheit und die zumindest eine zweite Kopplungseinheit sich jeweils über einen wesentlichen Teil der Haupterstreckung des Verbindungselements erstrecken. Unter einem "wesentlichen Teil der Haupterstreckung eines Elements" sollen mindestens 10 %, vorzugsweise zumindest 20 % und besonders bevorzugt zumindest 40 % der Erstreckung des Elements entlang der Haupterstreckung des Elements verstanden werden. Die zumindest eine erste Kopplungseinheit erstreckt sich in einem ersten Bereich, insbesondere Endbereich, entlang der Haupterstreckungsachse des Verbindungselements von einem ersten Ende des Verbindungselements entlang mindestens 10 %, bevorzugt mindestens 20 %, besonders bevorzugt mindestens 30 %, der Haupterstreckung des Verbindungselements. Die zumindest eine zweite Kopplungseinheit erstreckt sich in einem zweiten Bereich, insbesondere Endbereich, entlang der Haupterstreckungsachse des Verbindungselements von einem zweiten Ende des Verbindungselements entlang mindestens 10 %, bevorzugt mindestens 20 %, besonders bevorzugt mindestens 30 %, der Haupterstreckung des Verbindungselements. Dadurch kann eine vorteilhafte Tragewirkung der Kopplungseinheiten für den Wischflüssigkeitskanal erreicht werden. Weiterhin kann eine vorteilhafte Tragewirkung der Verbindungseinheit für die Kopplungseinheiten erreicht werden.

Ferner wird vorgeschlagen, dass das Verbindungselement in einem montierten Zustand an der Wischstange anliegt und zumindest einen Hohlraum mit der Wischstange in Umfangsrichtung begrenzt. Das zumindest eine, insbesondere genau eine, Verbindungselement liegt vorzugsweise in einem montierten Zustand formschlüssig an der Wischstange an. Vorzugsweise liegt das zumindest eine Verbindungselement in einem montierten Zustand in zumindest zwei, insbesondere genau zwei, Kontaktbereichen an der zumindest einen Wischstange an. Vorzugsweise erstrecken sich die Kontaktbereiche über die gesamte Haupterstreckungslänge der Verbindungseinheit. Vorzugsweise sind die Kontaktbereiche als Kontaktflächen ausgebildet. Vorzugsweise sind die Kontaktflächen zumindest in dem ersten und dem zweiten Bereich des Verbindungselements zumindest im Wesentlichen rechteckig. Vorzugsweise ist zwischen den Kontaktflächen ein Hohlraum ausgebildet. Vorzugsweise weist der Hohlraum einen im Wesentlichen trapezförmigen Querschnitt auf senkrecht zu seiner Haupterstreckungsachse. Vorzugsweise grenzt die längste Seite des trapezförmigen Querschnitts an die Wischstange. Vorzugsweise grenzen die anderen Seiten des trapezförmigen Querschnitts des Hohlraums an das Verbindungselement. Bevorzugt ist der Hohlraum von einer Ausnehmung in dem Verbindungselement gebildet. Vorzugsweise erstreckt sich der Hohlraum über die gesamte Haupterstreckungslänge des Verbindungselements. Vorteilhaft kann dadurch eine Biegsamkeit des Verbindungselements erreicht werden. Vorteilhaft kann dadurch eine Montageerleichterung, insbesondere für die geknickten Bereiche der Wischstange, erreicht werden.

Des Weiteren wird vorgeschlagen, dass die zumindest eine erste Kopplungseinheit und die zumindest eine zweite Kopplungseinheit jeweils zwei Befestigungsstege aufweisen, welche voneinander beabstandet sind und über das zumindest eine Verbindungselement miteinander verbunden sind. Die erste Kopplungseinheit und die zweite Kopplungseinheit umfassen jeweils zumindest zwei Befestigungsstege, welche jeweils zwei Aufnahmeelemente aufweisen. Die Befestigungsstege sind jeweils zumindest teilweise von Aufnahmeelement ausgebildet. Die Befestigungsstege weisen, in einer Ebene senkrecht zu der Haupterstreckungsrichtung des Verbindungselements, jeweils einen Bereich mit zumindest im Wesentlichen C-förmiger Querschnittsform auf. Die Befestigungsstege weisen, in einer Ebene senkrecht zu der Haupterstreckungsrichtung des Verbindungselements, jeweils einen Bereich mit zumindest im Wesentlichen J-förmiger Querschnittsform auf. Der im Querschnitt C-förmige Bereich bildet ein Aufnahmeelement zu einer teilweisen Kopplung mit der Wischstange aus. Der im Querschnitt C-förmige Bereich liegt im montierten Zustand in Wischrichtung seitlich an der Wischstange an. Der im Querschnitt J-förmige Bereich bildet ein Aufnahmeelement zu einer teilweisen Kopplung mit dem Wischflüssigkeitskanal aus. Der im Querschnitt J-förmige Bereich liegt im montierten Zustand in Wischrichtung seitlich an dem Wischflüssigkeitskanal an. Die Aufnahmeelemente eines Befestigungsstegs sind jeweils einstückig ausgebildet. Die Befestigungsstege sind zueinander gespiegelt angeordnet. Die Innenwölbungen der im Querschnitt C-förmigen Bereiche der Befestigungsstege sind einander zugewandt angeordnet. Die freistehenden Enden der im Querschnitt J-förmigen Bereiche der Befestigungsstege sind jeweils einander zugewandt. Jeweils zwei gespiegelte Befestigungsstege bilden die erste und die zweite Kopplungseinheit aus. Die Befestigungsstege der ersten und der zweiten Kopplungseinheit sind über das Verbindungselement miteinander verbunden. Die zwei im Querschnitt C-förmigen Bereiche der Befestigungsstege grenzen direkt an das Verbindungselement an. Die zwei im Querschnitt C-förmigen Bereiche der Befestigungsstege grenzen an einer dem Verbindungselement abgewandten Seite direkt an die zwei im Querschnitt J-förmigen Bereiche der Befestigungsstege an. Die zwei im Querschnitt C-förmigen Bereiche der Befestigungsstege sind an einer dem Verbindungselement abgewandten Seite mit den zwei im Querschnitt J-förmigen Bereichen der Befestigungsstege, insbesondere kraftschlüssig, bevorzugt stoffschlüssig, verbunden. Die zwei im Querschnitt C-förmigen Bereiche der Befestigungsstege sind vorzugsweise einteilig mit den zwei im Querschnitt J-förmigen Bereichen der Befestigungsstege ausgebildet. Vorteilhaft kann dadurch eine stabile Aufnahme der Wischstange und/oder des Wischflüssigkeitskanals erreicht werden. Vorteilhaft kann dadurch eine materialsparende und intuitiv montierbare Kopplungsvorrichtung ausgebildet werden.

Zudem geht die Erfindung aus von einer Wischarmvorrichtung mit einer Kopplungsvorrichtung.

Ferner wird eine Wischarmvorrichtung vorgeschlagen mit zumindest einer Wischstange, welche zumindest einen ersten Stangenbereich mit einer ersten Haupterstreckungsrichtung und/oder Haupterstreckungsebene und zumindest einen zweiten benachbarten Stangenbereich mit einer zweiten Haupterstreckungsrichtung und/oder Haupterstreckungsebene aufweist, wobei die Haupterstreckungsrichtungen und/oder Haupterstreckungsebenen der zumindest zwei Stangenbereiche einen von 180° verschiedenen Winkel zueinander ausbilden, und im montierten Zustand die zumindest eine erste Kopplungseinheit in dem zumindest einen ersten Stangenbereich angeordnet ist und die zumindest eine zweite Kopplungseinheit in dem zumindest einen zweiten Stangenbereich angeordnet ist. Vorteilhaft kann die Kopplungseinheit eine Krümmung und/oder Verdrehung zweier Teilbereiche eines Wischarms durch den freien elastischen Bereich abfangen.

Zudem geht die Erfindung aus von einem Verfahren zur Herstellung einer Kopplungsvorrichtung. Vorzugsweise wird in zumindest einem Verfahrensschritt das Verbindungselement mit der zumindest einen ersten Kopplungseinheit und der zumindest einen zweiten Kopplungseinheit in einem Co-Extrusionsverfahren aus verschiedenen Materialien hergestellt. In zumindest einem Verfahrensschritt wird insbesondere das Verbindungselement aus einem anderen Material extrudiert als die zumindest eine Kopplungseinheit und die zumindest eine zweite Kopplungseinheit. In zumindest einem Verfahrensschritt wird die zumindest eine erste Kopplungseinheit aus demselben Material extrudiert wie die zumindest eine weitere Kopplungseinheit. In zumindest einem Verfahrensschritt wird durch einen Materialzufuhrstopp die zumindest eine erste Kopplungseinheit getrennt von der zumindest einen zweiten Kopplungseinheit hergestellt, insbesondere extrudiert, wobei ein Material des Verbindungselements weiter extrudiert wird. Alternativ ist denkbar, dass in zumindest einem Verfahrensschritt das Verbindungselement mit der zumindest einen ersten Kopplungseinheit und der zumindest einen zweiten Kopplungseinheit in einem zwei Komponenten Spritzverfahren aus verschiedenen Materialien hergestellt wird. In zumindest einem Verfahrensschritt wird durch einen Materialzufuhrstopp die zumindest eine erste Kopplungseinheit getrennt von der zumindest einen zweiten Kopplungseinheit hergestellt, insbesondere gespritzt. Vorteilhaft kann dadurch eine Schränkungsvarianz der Wischstange des Wischarms durch die Kopplungseinheit abgefangen werden.

Die erfindungsgemäße Kopplungsvorrichtung soll hierbei nicht auf die oben beschriebene Anwendung und Ausführungsform beschränkt sein. Insbesondere kann die erfindungsgemäße Kopplungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischarmvorrichtung mit einer erfindungsgemäßen Kopplungsvorrichtung, mit einem Wischdüsenelement, mit einem Wischarm und mit einem Wischblatt in einer schematischen Darstellung,
- Fig. 2: die erfindungsgemäße Kopplungsvorrichtung mit einem Verbindungselement und der ersten Kopplungseinheit in einem montierten Zustand in einer schematischen Schnittdarstellung entlang der Schnittlinie II,
- Fig. 3: die erfindungsgemäße Kopplungsvorrichtung mit einem Verbindungselement und der ersten Kopplungseinheit in einem montierten Zustand in einer schematischen Schnittdarstellung entlang der Schnittlinie III,
- Fig. 4: die erfindungsgemäße Kopplungsvorrichtung mit einem Verbindungselement und der ersten und zweiten Kopplungseinheit im unmontierten Zustand in einer schematischen Seitenansicht,
- Fig. 5: die erfindungsgemäße Kopplungsvorrichtung mit einem Verbindungselement und der ersten Kopplungseinheit in einem montierten Zustand in einer schematischen Schnittdarstellung entlang der Schnittlinie II in einem teilweise montierten Zustand und
- Fig. 6: ein Verfahren zur Herstellung einer Kopplungsvorrichtung in einer schematischen Darstellung.

### Beschreibung des Ausführungsbeispiels

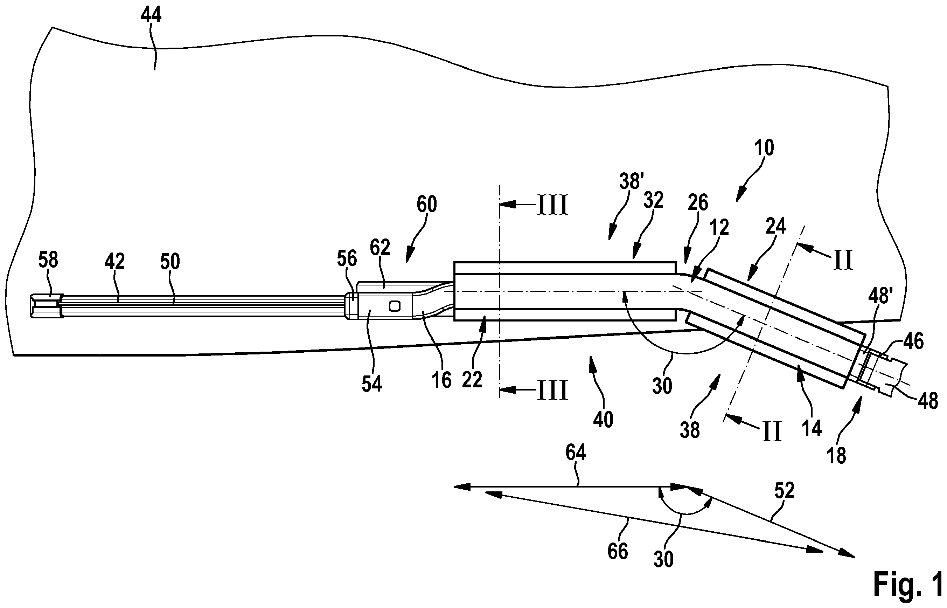

Figur 1 zeigt eine Wischarmvorrichtung 40 mit einer erfindungsgemäßen Kopplungsvorrichtung 10, einem Wischarm 18 und einem Wischblatt 42. Ferner zeigt Figur 1 einen Ausschnitt einer zu reinigenden Oberfläche 44, insbesondere Scheibe, eines nicht weiter sichtbaren Kraftfahrzeugs.

Der Wischarm 18 weist eine Wischstange 16 auf. Der Wischarm 18 weist zwei Wischarmsegmente 48,48' und ein Scharnier 46 auf. Die Wischarmsegmente 48, 48' sind über das Scharnier 46 verbunden. Das zweite Wischarmsegment 48' umfasst die Wischstange 16. Ferner ist in der Umgebung des Scharniers 46 ein nicht weiter sichtbares Federelement angeordnet. Das nicht weiter sichtbare Federelement ist dazu vorgesehen, in einem Andrückbereich des zweiten Wischarmsegments 48' das zweite Wischarmsegment 48' in Richtung der zu reinigenden Oberfläche 44 zu drücken. Die zu reinigende Oberfläche 44 ist von einer Kraftfahrzeugscheibe gebildet. Das erste Wischarmsegment 48 ist mit dem nicht weiter sichtbaren Kraftfahrzeug verbunden. Das erste Wischarmsegment 48 ist, entlang einer Haupterstreckungsrichtung 66 des Wischarms 18 betrachtet, an einem äußeren Ende des Wischarms 18 mit der Wischstange 16 verbunden. Das erste Wischarmsegment 48 wird über einen nicht weiter sichtbaren Antriebsmotor angetrieben. An einem dem Scharnier 46 abgewandten Ende des zweiten Wischarmsegments 48' ist ein Wischarmadapter 54 angeordnet. Der Wischarmadapter 54 ist fest verbunden, insbesondere einstückig, mit dem zweiten Wischarmsegment 48' ausgebildet. Der Wischarmadapter 54 ist zur Aufnahme eines Wischblattadapters 56 des Wischblatts 42 vorgesehen.

Das Wischblatt 42 weist den Wischblattadapter 56 auf. Das Wischblatt 42 weist den Wischblattadapter 56 zur Kopplung mit dem Wischarm 18 auf. Ferner weist das Wischblatt 42 eine Wischblattwindabweisereinheit 50, zumindest eine nicht weiter sichtbare Federschiene, zumindest eine nicht weiter sichtbare Wischlippe und zwei Endkappen 58, wovon lediglich eine sichtbar ist, auf. Das Wischblatt 42 wischt in einem Betriebszustand über die zu reinigende Oberfläche 44. Die nicht weiter sichtbare Wischlippe des Wischblatts 42 ist während eines Wischbetriebszustands dazu vorgesehen, an der zu reinigenden Oberfläche 44 anzuliegen und über diese zu wischen.

Die nicht weiter sichtbare Wischlippe ist über die nicht weiter sichtbare Federschiene in der Wischblattwindabweisereinheit 50 gehalten.

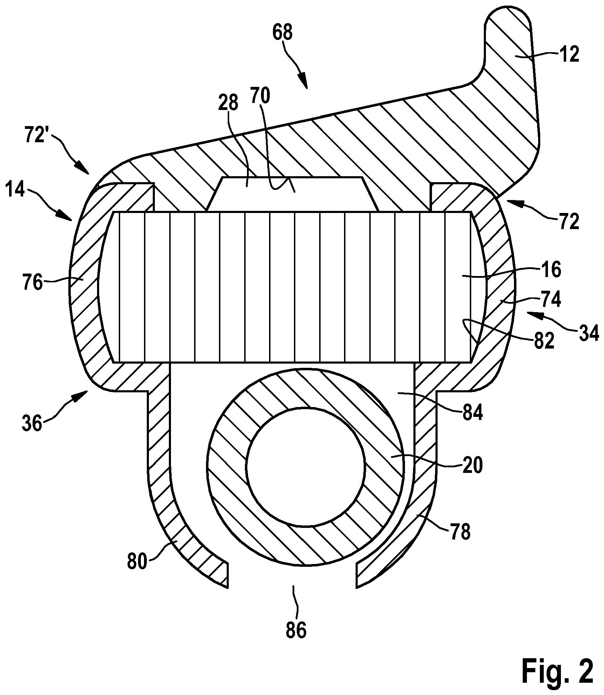

Die Wischarmvorrichtung 40 weist einen Wischflüssigkeitskanal 20 auf (vgl. Figur 2). Der Wischflüssigkeitskanal 20 ist dazu vorgesehen, Wischflüssigkeit entlang des Wischarms 18 zu führen. Der Wischflüssigkeitskanal 20 ist von einem Schlauch gebildet. Ferner ist der Wischflüssigkeitskanal 20 im wesentlichen hohlzylindrisch ausgebildet. Des Weiteren weist die Wischarmvorrichtung 40 ein Wischdüsenelement 60 auf. Das Wischdüsenelement 60 ist aufgesteckt oder intergiert an dem Wischarm in einer Umgebung des Wischblatts angebracht. Das Wischdüsenelement 60 ist von einer Düse gebildet. Ferner ist das Wischdüsenelement 60 zur Auftragung von Wischflüssigkeit auf die zu reinigende Oberfläche 44 vorgesehen. Das Wischdüsenelement 60 ist zur Auftragung von Wischflüssigkeit auf die Scheibe vorgesehen. Das Wischdüsenelement 60 ist in einen Grundkörper 62 integriert. Das Wischdüsenelement 60 ist nicht weiter sichtbar mit einem nicht weiter sichtbaren Anschluss für den Wischflüssigkeitskanal 20 verbunden. Ferner weist das Wischdüsenelement 60 ein nicht weiter sichtbares Kopplungselement auf. Das nicht weiter sichtbare Kopplungselement des Wischdüsenelements 60 ist in einem montierten Zustand dazu vorgesehen, mit dem Wischarmadapter 54 des Wischarms 18 verbunden zu werden. Das nicht weiter sichtbare Kopplungselement des Wischdüsenelements 60 ist nicht weiter sichtbar mit dem Wischarmadapter 54 gekoppelt. Der Wischflüssigkeitskanal 20 ist über den nicht weiter sichtbaren Anschluss mit dem Wischdüsenelement 60 verbunden. An einem dem Wischdüsenelement 60 abgewandten Ende des Wischflüssigkeitskanals 20 ist der Wischflüssigkeitskanal 20 nicht weiter sichtbar mit einer nicht weiter sichtbaren Wischflüssigkeitszufuhr verbunden.

Die Wischstange 16 des Wischarms 18 weist zwei Stangenbereiche 38, 38' auf.

Die Wischstange 16 weist zumindest einen ersten Stangenbereich 38 mit einer ersten Haupterstreckungsrichtung 52 und/oder Haupterstreckungsebene und zumindest einen zweiten benachbarten Stangenbereich 38' mit einer zweiten Haupterstreckungsrichtung 64 und/oder Haupterstreckungsebene auf, wobei die Haupterstreckungsrichtungen 52, 64 und/oder Haupterstreckungsebenen der zumindest zwei Stangenbereiche 38, 38' einen von 180° verschiedenen Winkel 30 zueinander ausbilden.

Die Wischarmvorrichtung 40 umfasst eine Kopplungsvorrichtung 10, insbesondere Wischarmkopplungsvorrichtung, mit zumindest einem Verbindungselement 12 und mit zumindest einer ersten Kopplungseinheit 14. Die Kopplungsvorrichtung 10 ist in einem montierten Zustand dazu vorgesehen ist, mit einer Wischstange 16 eines Wischarms 18 verbunden zu werden. Die Kopplungsvorrichtung 10 ist dazu vorgesehen in einem montierten Zustand einen Wischflüssigkeitskanal 20 zumindest teilweise aufzunehmen. Die erste Kopplungseinheit 14 ist in einem ersten Bereich 24 des zumindest einen Verbindungselements 12 mit dem zumindest einen Verbindungselement 12 verbunden. Die Kopplungsvorrichtung 10 umfasst zumindest eine zweite Kopplungseinheit 22, die in einem montierten Zustand dazu vorgesehen ist, mit der Wischstange 16 des Wischarms 18 verbunden zu werden und den Wischflüssigkeitskanal 20 zumindest teilweise aufzunehmen. Die zweite Kopplungseinheit 22 ist in einem von dem ersten Bereich 24 in Haupterstreckungsrichtung 66 des Wischarms 18 verschieden angeordneten zweiten Bereich 32 des zumindest einen Verbindungselements 12 mit dem zumindest einen Verbindungselement 12 verbunden. Die erste Kopplungseinheit 14 und die zweite Kopplungseinheit 22 sind dazu vorgesehen, mit dem zweiten Wischarmsegment 48' der Wischstange 16 verbunden zu werden. Das zumindest eine Verbindungselement 12 weist zumindest einen weiteren Bereich 26 entlang seiner Haupterstreckungsrichtung 66 auf, welcher frei von der ersten Kopplungseinheit 14 und frei von der zweiten Kopplungseinheit 22 ausgebildet ist. Das Verbindungselement 12 ist aus einem anderen Material ausgebildet als die erste Kopplungseinheit 14 und als die zweite Kopplungseinheit 22. Die zumindest eine erste Kopplungseinheit 14 und die zumindest eine zweite Kopplungseinheit 22 erstrecken sich jeweils über einen wesentlichen Teil der Haupterstreckung des Verbindungselements 12. Die zumindest eine erste Kopplungseinheit 14 und die zumindest eine zweite Kopplungseinheit 22 sind mit dem Verbindungselement 12 in einem Co-Extrusionsverfahren hergestellt. Die Kopplungsvorrichtung 10 folgt im montierten Zustand dem Verlauf des Wischarms 18 zwischen den Endbereichen des Wischarms 18. Die Kopplungsvorrichtung 10 führt den Wischflüssigkeitskanal 20 entlang der Krümmung des Wischarms 18. Im montierten Zustand ist die zumindest eine erste Kopplungseinheit 14 in dem zumindest einen ersten Stangenbereich 38 angeordnet und die zumindest eine zweite Kopplungseinheit 22 ist in dem zumindest einen zweiten Stangenbereich 38' angeordnet.

Figur 2 zeigt die erste Kopplungseinheit 14 der Kopplungsvorrichtung 10 mit einem Verbindungselement 12 in einem montierten Zustand im Querschnitt II. Die erste Kopplungseinheit 14 weist eine Haupterstreckungsrichtung 52 auf, die in einem montierten Zustand von einer Haupterstreckungsrichtung 66 des Wischarms 18 abweicht.

Die Kopplungsvorrichtung 10 weist das Verbindungselement 12 auf. Das Verbindungselement 12 erstreckt sich, entlang der Haupterstreckungsrichtung 66 der Kopplungsvorrichtung 10 betrachtet, über eine gesamte Länge der Kopplungsvorrichtung 10. Die Kopplungsvorrichtung 10 ist teilweise als ein Wischarmwindabweiserelement gebildet. Das Verbindungselement 12 der Kopplungsvorrichtung 10 ist als Windabweiserelement, insbesondere Wischarmwindabweiserelement ausgebildet. Das Verbindungselement 12 ist, in einer Ebene II senkrecht zu der Haupterstreckungsrichtung 52 der Kopplungsvorrichtung 10 betrachtet, annähernd dreieckig ausgebildet. Eine größte Außenseite des Verbindungselements 12 ist in dieser Ebene konkav gekrümmt. Eine zweite Außenseite 70 des Verbindungselements 12 ist in dieser Ebene konvex in einem mittigen Bereich 68 gekrümmt.

Das Verbindungselement 12 liegt in einem montierten Zustand an der Wischstange 16 an und begrenzt zumindest einen Hohlraum 28 mit der Wischstange 16 in Umfangsrichtung. Der Hohlraum 28 erstreckt sich, insbesondere entlang der Haupterstreckungsrichtung 66 der Kopplungsvorrichtung 10 betrachtet, über eine gesamte Länge des Verbindungselements 12. Der Hohlraum 28 weist, in einer Ebene senkrecht zu der Haupterstreckungsrichtung 66 der Kopplungsvorrichtung 10 betrachtet, eine Außenkontur auf, die im Wesentlichen trapezförmig ist. Die längste Seite der trapezförmigen Außenkontur grenzt im montierten Zustand an die Wischstange 16.

Die zumindest eine erste Kopplungseinheit 14 und die zumindest eine zweite Kopplungseinheit 22 weisen jeweils zwei Befestigungsstege 34, 34', 36, 36' auf. Die jeweils zwei Befestigungsstege 34, 34', 36, 36' sind voneinander beabstandet. Die jeweils zwei Befestigungsstege 34, 34', 36, 36' sind über das zumindest eine Verbindungselement 12 miteinander verbunden. Die erste Kopplungseinheit 14 und die zweite Kopplungseinheit 22 umfassen zumindest zwei Befestigungsstege 34, 34', 36, 36', welche jeweils zwei Aufnahmeelemente 74, 74', 76, 76', 78, 78`, 80, 80' aufweisen. Die Befestigungsstege 34, 36 sind jeweils an dem Verbindungselement 12 angeordnet. Die Befestigungsstege 34, 36 sind jeweils entlang der Haupterstreckung an der zweiten Außenseite 70 des Verbindungselements 12 mit dem Verbindungselement 12 verbunden. Die Befestigungsstege 34, 36 sind im Querschnitt II jeweils in seitlichen Endbereichen 72, 72' an der zweite Außenseite 70 des Verbindungselements 12 mit dem Verbindungselement 12 verbunden.

Die Befestigungsstege 34, 36 der ersten Kopplungseinheit 14 sind jeweils zumindest teilweise, insbesondere vollständig, von Aufnahmeelementen 74, 76, 78, 80 ausgebildet. Die Befestigungsstege 34, 36 weisen, in einer Ebene II senkrecht zu der abschnittsweisen Haupterstreckungsrichtung 52 des Verbindungselements 12, jeweils ein Aufnahmeelement 74, 76 mit zumindest im Wesentlichen C-förmiger Querschnittsform auf. Das im Querschnitt II C-förmige Aufnahmeelement 74, 76 ist zu einer teilweisen Kopplung mit der Wischstange 16 ausgebildet. Das Aufnahmeelement 74, 76 liegt im montierten Zustand in Wischrichtung seitlich an der Wischstange 16 an.

Die Befestigungsstege 34, 36 weisen, in einer Ebene II senkrecht zu der abschnittsweisen Haupterstreckungsrichtung 52 des Verbindungselements 12, jeweils ein Aufnahmeelement 78, 80 mit zumindest im Wesentlichen J-förmiger Querschnittsform auf. Das im Querschnitt J-förmige Aufnahmeelement 78, 80 ist zu einer teilweisen Kopplung mit dem Wischflüssigkeitskanal 20 ausgebildet. Das Aufnahmeelement 78, 80 liegt im montierten Zustand in Wischrichtung seitlich an dem Wischflüssigkeitskanal 20 an.

Die Befestigungsstege 34, 36 sind zueinander gespiegelt angeordnet. Die Innenwölbungen der im Querschnitt II C-förmigen Aufnahmeelemente 74, 76 der Befestigungsstege 34, 36 sind einander zugewandt angeordnet. Die freistehenden Enden der im Querschnitt II J-förmigen Aufnahmeelemente 78, 80 der Befestigungsstege 34, 36 sind jeweils einander zugewandt. Jeweils zwei gespielte Befestigungsstege 34, 34', 36, 36' bilden die erste und die zweite Kopplungseinheit 14, 22 aus. Die zwei im Querschnitt II C-förmigen Aufnahmeelemente 74, 76 der Befestigungsstege 34, 36 grenzen direkt an das Verbindungselement 12 an. Die zwei im Querschnitt C-förmigen Aufnahmeelemente 74, 76 der Befestigungsstege 34, 36 sind mit dem Verbindungselement 12 verbunden. Die Befestigungsstege 34, 34', 36, 36' der ersten und der zweiten Kopplungseinheit 14, 22 sind über das Verbindungselement 12 miteinander verbunden.

Die zwei im Querschnitt C-förmigen Aufnahmeelemente 74, 76 der Befestigungsstege 34, 36 grenzen an einer dem Verbindungselement 12 abgewandten Seite direkt an die zwei im Querschnitt J-förmigen Aufnahmeelemente 74, 76 der Befestigungsstege 34, 36 an. Die zwei im Querschnitt C-förmigen Aufnahmeelemente 74, 76 der Befestigungsstege 34, 36 sind an einer dem Verbindungselement 12 abgewandten Seite mit den zwei im Querschnitt J-förmigen Aufnahmeelementen 78, 80 der Befestigungsstege 34, 36 verbunden.

Die im Querschnitt II C-förmigen Aufnahmeelemente 74, 76 bilden einen Aufnahmeraum 82 zur seitlich formschlüssigen Aufnahme der Wischstange 16 aus. Die im Querschnitt II J-förmigen Aufnahmeelemente 78, 80 bilden einen Aufnahmeraum 84 zur seitlich formschlüssigen Aufnahme des Wischflüssigkeitskanals 20 aus. Die Aufnahmeräume 82, 84 erstrecken sich über die gesamte abschnittsweise Haupterstreckung mit Haupterstreckungsrichtung 52 des Verbindungselements 12. Die Aufnahmeräume 82, 84 der ersten Kopplungseinheit 14 sind miteinander verbunden.

Die Aufnahmeräume 82, 84 sind, in einer Ebene senkrecht zu der abschnittsweisen Haupterstreckungsrichtung 52 der Kopplungsvorrichtung 10 betrachtet, zumindest zu 50 % von den Befestigungsstegen 34, 36 und/oder dem Verbindungselement 12 begrenzt. An einer dem Verbindungselement 12 im montierten Zustand gegenüberliegenden Seite ist der Aufnahmeraum 84 durch die zwei Befestigungsstege 34, 36 begrenzt, wobei zwischen den freistehenden Enden der im Querschnitt II J-förmigen Aufnahmeelemente 78, 80 der zwei Befestigungsstege 34, 36 eine Lücke 86 angeordnet ist. Über die Lücke 86 wird die Wischstange 16 des Wischarms 18 in den Aufnahmeraum 82 gebracht. Dabei werden durch Druck die beiden Befestigungsstege 34, 36 nach außen elastisch ausgelenkt, so dass sich die Lücke 86 vergrößert und die Wischstange 16 durch die Lücke 86 geschoben werden kann. Ferner wird über die Lücke 86 der Wischflüssigkeitskanal 20 in den Aufnahmeraum 84 gebracht. Dabei werden durch Druck die beiden Befestigungsstege 34, 36 nach außen elastisch ausgelenkt, sodass sich die Lücke 86 vergrößert und der Wischflüssigkeitskanal 20 durch die Lücke 86 geschoben werden kann.

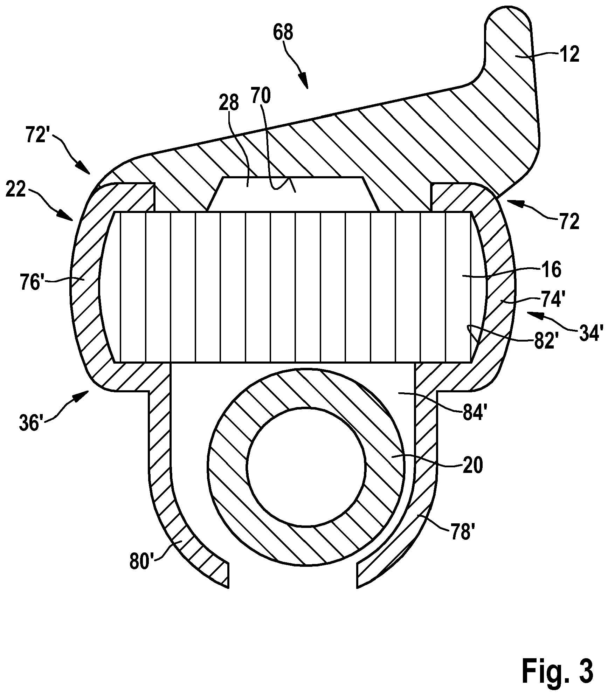

Figur 3 zeigt die zweite Kopplungseinheit 22 der Kopplungsvorrichtung 10 mit einem Verbindungselement 12 in einem montierten Zustand im Querschnitt III. Die zweite Kopplungseinheit 22 weist eine Haupterstreckungsrichtung 64 auf, die in einem montierten Zustand einer Haupterstreckungsrichtung 66 des Wischarms 18 abweicht. Die zweite Kopplungseinheit 22 ist analog zu der ersten Kopplungseinheit 14 ausgebildet. Die Befestigungsstege 34`, 36` weisen die Aufnahmeelemente 74', 76', 78`, 80' auf, welche analog zu den Aufnahmeelementen 74, 76, 78, 80 ausgebildet sind.

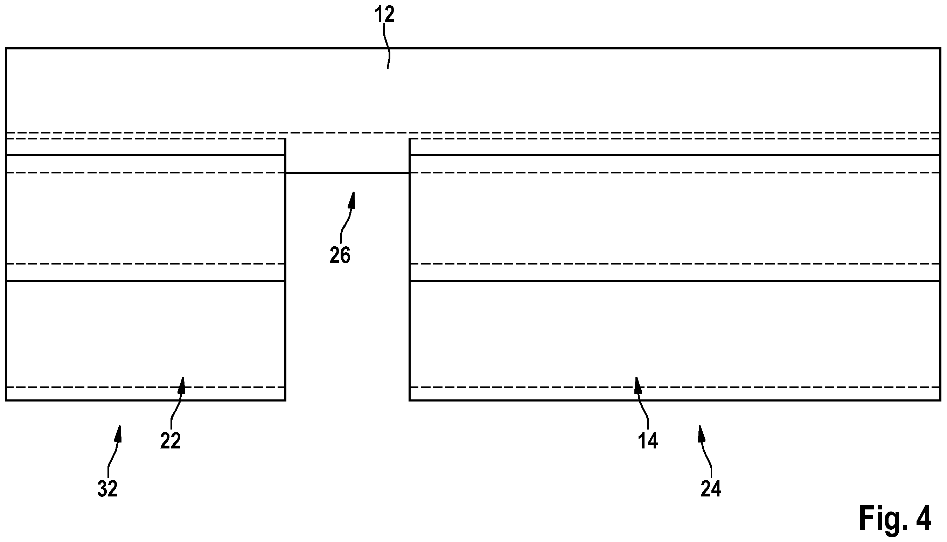

Figur 4 zeigt die Kopplungsvorrichtung 10 mit drei Bereichen 24, 26, 32 des Verbindungselements 12. In einem ersten Bereich 24 ist die erste Kopplungseinheit 14 mit dem Verbindungselement 12 verbunden. In einem zweiten Bereich 32 ist die zweite Kopplungseinheit 22 mit dem Verbindungselement 12 verbunden. Ein mittig gelegener weiterer Bereich 26 ist frei von einer Kopplungseinheit 14, 22 ausgebildet. Und liegt zwischen dem ersten und zweiten Bereich 24, 32. Durch den von einer aus einem harten Material hergestellten Kopplungseinheit 14, 22 freien Bereich 26 kann das elastische Verbindungselement 12 gebogen werden und einem gekrümmten Wischarmverlauf folgen. Je nach Ausprägung der Krümmung des Wischarms 18 kann der freie Bereich 26 unterschiedlich lang ausgebildet sein, um eine entsprechende Biegung der Kopplungsvorrichtung 10 zu gewährleisten.

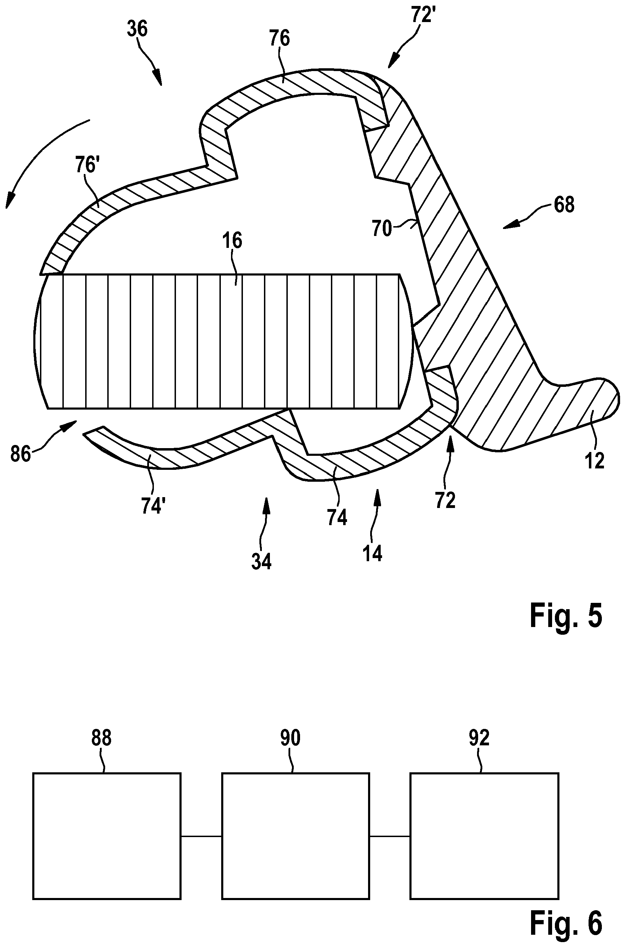

Figur 5 zeigt die erste Kopplungseinheit 14 in einem teilweise montierten Zustand an der Wischstange 16. Zu einer Montage wird die Wischstange 16 durch die Lücke 86 und durch den Aufnahmeraum 84 in den Aufnahmeraum 82 durch eine Dreh-Auslenkungsbewegung gebracht. Durch Drehung der Kopplungseinheit 14 und/oder des Verbindungselements 12 bei Auslenkung der Befestigungsstege 34, 36 wird die Wischstange 16 seitlich formschlüssig in dem Aufnahmeraum 82 aufgenommen. Nach einer Montage der Kopplungsvorrichtung an der Wischstange 16 des Wischarms 18 kann beispielsweise ein Schlauch als Wischflüssigkeitskanal 20 auf analoge Weise in den Aufnahmeraum 84 eingebracht werden.

In einem Verfahren zur Herstellung einer Kopplungsvorrichtung 10 wird in zumindest einem Verfahrensschritt, insbesondere einem Extrusionsschritt 88, das Verbindungselement 12 mit der zumindest einen ersten Kopplungseinheit 14 in einem Co-Extrusionsverfahren aus verschiedenen Materialien hergestellt. In zumindest einem Verfahrensschritt, insbesondere dem einen Extrusionsschritt 88, wird das Verbindungselement 12 aus einem anderen, insbesondere weicheren, Material extrudiert als die zumindest eine erste Kopplungseinheit 14 und die zumindest eine zweite Kopplungseinheit 22. In zumindest einem Verfahrensschritt, insbesondere dem einen Extrusionsschritt 88, wird das Verbindungselement 12 mit derselben Haupterstreckungsrichtung wie die zumindest eine erste Kopplungseinheit hergestellt.

In zumindest einem Verfahrensschritt, insbesondere einem Teilextrusionsschritt 90, wird das Verbindungselement 12 durch einen Materialzufuhrstopp für die zumindest eine erste Kopplungseinheit 14 getrennt weiter von der zumindest einen ersten Kopplungseinheit 14 hergestellt. In zumindest einem Verfahrensschritt, insbesondere einem Teilextrusionsschritt 90, wird das Verbindungselement 12 durch einen Materialzufuhrstopp für die zumindest eine erste Kopplungseinheit 14 über die Haupterstreckung der zumindest einen ersten Kopplungseinheit 14 hinaus in Haupterstreckungsrichtung der ersten Kopplungseinheit 14 und des bisherig hergestellten Teils des Verbindungselements 12 weiter hergestellt.

In zumindest einem Verfahrensschritt, insbesondere einem Weiterextrusionsschritt 92, wird durch eine Beendigung des Materialzufuhrstopps die zumindest eine zweite Kopplungseinheit 22 zusammen mit dem Verbindungselement 12 getrennt von der zumindest einen ersten Kopplungseinheit 14 hergestellt. In zumindest einem Verfahrensschritt, insbesondere dem einen Weiterextrusionsschritt 92, wird die zumindest eine zweite Kopplungseinheit 22 aus demselben Material extrudiert wie die zumindest eine erste Kopplungseinheit 14. In zumindest einem Verfahrensschritt, insbesondere einem Weiterextrusionsschritt 92, wird das Verbindungselement 12 mit der zumindest einen zweite Kopplungseinheit 22 in Haupterstreckungsrichtung des bisherig hergestellten Teils des Verbindungselements 12 über die Haupterstreckung des bisherig hergestellten Teils des Verbindungselements 12 weiter hergestellt.

## Patentansprüche

1. Kopplungsvorrichtung, insbesondere Wischarmkopplungsvorrichtung, mit zumindest einem Verbindungselement (12) und mit zumindest einer ersten Kopplungseinheit (14), die in einem montierten Zustand dazu vorgesehen ist, mit einer Wischstange (16) eines Wischarms (18) verbunden zu werden und einen Wischflüssigkeitskanal (20) zumindest teilweise aufzunehmen, und die in einem ersten Bereich (24) des zumindest einen Verbindungselements (12) mit dem zumindest einen Verbindungselement (12) verbunden ist, und mit zumindest eine zweite Kopplungseinheit (22), die in einem montierten Zustand dazu vorgesehen ist, mit der Wischstange (16) des Wischarms (18) verbunden zu werden und den Wischflüssigkeitskanal (20) zumindest teilweise aufzunehmen, und welche in einem von dem ersten Bereich (24) in Haupterstreckungsrichtung (66) verschieden angeordneten zweiten Bereich (32) des zumindest einen Verbindungselements (12) mit dem zumindest einen Verbindungselement (12) verbunden ist, **dadurch gekennzeichnet, dass** das Verbindungselement (12) aus einem anderen Material ausgebildet ist als die erste Kopplungseinheit (14) und als die zweite Kopplungseinheit (22).

2. Kopplungsvorrichtung nach Anspruch 1, **dadurch gekennzeichnet, dass** das zumindest eine Verbindungselement (12) zumindest einen weiteren Bereich (26) entlang seiner Haupterstreckung aufweist, welcher frei von der ersten Kopplungseinheit (14) und frei von der zweiten Kopplungseinheit (22) ausgebildet ist.

3. Kopplungsvorrichtung nach einem der vorhergehenden Ansprüche, **dadurch gekennzeichnet, dass** die zumindest eine erste Kopplungseinheit (14) und die zumindest eine zweite Kopplungseinheit (22) mit dem Verbindungselement (12) in einem Co-Extrusionsverfahren hergestellt sind.

4. Kopplungsvorrichtung nach einem der vorhergehenden Ansprüche, **dadurch gekennzeichnet, dass** die zumindest eine erste Kopplungseinheit (14) und die zumindest eine zweite Kopplungseinheit (22) sich jeweils über einen wesentlichen Teil der Haupterstreckung des Verbindungselements (12) erstrecken.

5. Kopplungsvorrichtung nach einem der vorhergehenden Ansprüche, **dadurch gekennzeichnet, dass** das Verbindungselement (12) in einem montierten Zustand an der Wischstange (16) anliegt und zumindest einen Hohlraum (28) mit der Wischstange (16) in Umfangsrichtung begrenzt.

6. Kopplungsvorrichtung nach einem der vorhergehenden Ansprüche, **dadurch gekennzeichnet, dass** die zumindest eine erste Kopplungseinheit (14) und die zumindest eine zweite Kopplungseinheit (22) jeweils zwei Befestigungsstege (34, 34'; 36, 36') aufweisen, welche voneinander beabstandet sind und über das zumindest eine Verbindungselement (12) miteinander verbunden sind.

7. Wischarmvorrichtung mit einer Kopplungsvorrichtung (10) nach einem der vorhergehenden Ansprüche.

8. Wischarmvorrichtung nach Anspruch 7, **gekennzeichnet durch** zumindest eine Wischstange (16), welche zumindest einen ersten Stangenbereich (38) mit einer ersten Haupterstreckungsrichtung (52) und/oder Haupterstreckungsebene und zumindest einen zweiten benachbarten Stangenbereich (38') mit einer zweiten Haupterstreckungsrichtung (64) und/oder Haupterstreckungsebene aufweist, wobei die Haupterstreckungsrichtungen (52, 64) und/oder Haupterstreckungsebenen der zumindest zwei Stangenbereiche (38, 38') einen von 180° verschiedenen Winkel (30) zueinander ausbilden, und im montierten Zustand die zumindest eine erste Kopplungseinheit (14) in dem zumindest einen ersten Stangenbereich (38) angeordnet ist und die zumindest eine zweite Kopplungseinheit (22) in dem zumindest einen zweiten Stangenbereich (38') angeordnet ist.

9. Verfahren zur Herstellung einer Kopplungsvorrichtung (10) nach einem der Ansprüche 1-8.

## Claims

1. Coupling device, in particular wiper arm coupling device, having at least one connecting element (12) and having at least one first coupling unit (14) which, when mounted, is provided to be connected to a wiper rod (16) of a wiper arm (18) and to at least partially accommodate a wiper fluid channel (20), and which is connected in a first region (24) of the at least one connecting element (12) to the at least one connecting element (12), and having at least one second coupling unit (22) which, when mounted, is provided to be connected to the wiper rod (16) of the wiper arm (18) and to at least partially accommodate the wiper fluid channel (20), and which is connected to the at least one connecting element (12) in a second region (32) of the at least one connecting element (12), the second region being arranged differently from the first region (24) in the main direction of extent (66), **characterized in that** the connecting element (12) is formed from a different material than the first coupling unit (14) and than the second coupling unit (22).

2. Coupling device according to Claim 1, **characterized in that** the at least one connecting element (12) has at least one further region (26) along its main extent, which region is free from the first coupling unit (14) and free from the second coupling unit (22).

3. Coupling device according to either of the preceding claims, **characterized in that** the at least one first coupling unit (14) and the at least one second coupling unit (22) are produced together with the connecting element (12) in a co-extrusion process.

4. Coupling device according to one of the preceding claims, **characterized in that** the at least one first coupling unit (14) and the at least one second coupling unit (22) each extend over a substantial part of the main extent of the connecting element (12).

5. Coupling device according to one of the preceding claims, **characterized in that** the connecting element (12), when mounted, lies against the wiper rod (16) and, together with the wiper rod (16), bounds at least one cavity (28) in the circumferential direction.

6. Coupling device according to one of the preceding claims, **characterized in that** the at least one first coupling unit (14) and the at least one second coupling unit (22) each have two fastening webs (34, 34'; 36, 36') which are spaced apart from each other and are connected to each other via the at least one connecting element (12) .

7. Wiper arm device having a coupling device (10) according to one of the preceding claims.

8. Wiper arm device according to claim 7, **characterized by** at least one wiper rod (16) which has at least one first rod region (38) with a first main direction of extent (52) and/or main plane of extent, and at least one second adjacent rod region (38') with a second main direction of extent (64) and/or main plane of extent, wherein the main directions of extent (52, 64) and/or main planes of extent of the at least two rod regions (38, 38') form an angle (30) different from 180° with respect to one another, and, when mounted, the at least one first coupling unit (14) is arranged in the at least one first rod region (38) and the at least one second coupling unit (22) is arranged in the at least one second rod region (38').

9. Method for producing a coupling device (10) according to one of Claims 1-8.

## Revendications

1. Dispositif d'accouplement, en particulier dispositif d'accouplement de bras d'essuie-glace, comportant au moins un élément de liaison (12) et comportant au moins une première unité d'accouplement (14) qui, dans un état monté, est prévue pour être reliée à une tige d'essuie-glace (16) d'un bras d'essuie-glace (18) et pour recevoir au moins partiellement un canal de liquide d'essuyage (20) et qui, dans une première région (24) de l'au moins un élément de liaison (12), est reliée à l'au moins un élément de liaison (12), et comportant au moins une deuxième unité d'accouplement (22) qui, dans un état monté, est prévue pour être reliée à la tige d'essuie-glace (16) du bras d'essuie-glace (18) et pour recevoir au moins partiellement le canal de liquide d'essuyage (20), et laquelle, dans une deuxième région (32) de l'au moins un élément de liaison (12), disposée différemment de la première région (24) dans la direction d'étendue principale (66), est reliée à l'au moins un élément de liaison (12), **caractérisé en ce que** l'élément de liaison (12) est réalisé à partir d'un autre matériau que la première unité d'accouplement (14) et que la deuxième unité d'accouplement (22).

2. Dispositif d'accouplement selon la revendication 1, **caractérisé en ce que** l'au moins un élément de liaison (12) présente au moins une autre région (26) le long de son étendue principale, laquelle est réalisée de manière à être dépourvue de la première unité d'accouplement (14) et de manière à être dépourvue de la deuxième unité d'accouplement (22).

3. Dispositif d'accouplement selon l'une des revendications précédentes, **caractérisé en ce que** l'au moins une première unité d'accouplement (14) et l'au moins une deuxième unité d'accouplement (22) sont fabriquées avec l'élément de liaison (12) dans un procédé de co-extrusion.

4. Dispositif d'accouplement selon l'une des revendications précédentes, **caractérisé en ce que** l'au moins une première unité d'accouplement (14) et l'au moins une deuxième unité d'accouplement (22) s'étendent respectivement sur une grande partie de l'étendue principale de l'élément de liaison (12).

5. Dispositif d'accouplement selon l'une des revendications précédentes, **caractérisé en ce que** l'élément de liaison (12), dans un état monté, s'appuie contre la tige d'essuie-glace (16) et délimite au moins une cavité (28) avec la tige d'essuie-glace (16) dans la direction périphérique.

6. Dispositif d'accouplement selon l'une des revendications précédentes, **caractérisé en ce que** l'au moins une première unité d'accouplement (14) et l'au moins une deuxième unité d'accouplement (22) présentent respectivement deux nervures de fixation (34, 34'; 36, 36'), lesquelles sont espacées l'une de l'autre et sont reliées l'une à l'autre par le biais de l'au moins un élément de liaison (12).

7. Dispositif de bras d'essuie-glace comportant un dispositif d'accouplement (10) selon l'une des revendications précédentes.

8. Dispositif de bras d'essuie-glace selon la revendication 7, **caractérisé par** au moins une tige d'essuie-glace (16), laquelle présente au moins une première région de tige (38) présentant une première direction d'étendue principale (52) et/ou un premier plan d'étendue principale et au moins une deuxième région de tige (38') adjacente présentant une deuxième direction d'étendue principale (64) et/ou un deuxième plan d'étendue principale, les directions d'étendue principale (52, 64) et/ou les plans d'étendue principale des au moins deux régions de tige (38, 38') formant l'une par rapport à l'autre un angle (30) différent de 180° et, dans l'état monté, l'au moins une première unité d'accouplement (14) étant disposée dans l'au moins une première région de tige (38) et l'au moins une deuxième unité d'accouplement (22) étant disposée dans l'au moins une deuxième région de tige (38').

9. Procédé de fabrication d'un dispositif d'accouplement (10) selon l'une des revendications 1 à 8.
